(19) Europäisches Patentamt
European Patent Office
Office européen des brevets

(11) **EP 0 663 579 B1**

(12) **EUROPÄISCHE PATENTSCHRIFT**

(45) Veröffentlichungstag und Bekanntmachung des Hinweises auf die Patenterteilung:
**23.02.2000   Patentblatt 2000/08**

(51) Int Cl.$^7$: **F27B 1/02**, C21C 5/56

(21) Anmeldenummer: **95890009.4**

(22) Anmeldetag: **12.01.1995**

(54) **Verfahren und Vorrichtung zum Herstellen von Eisenschmelzen in einem Herd-Schachtofen**

Method and installation for producing iron melts in a hearth-shaft furnace

Procédé et installation pour la production de fer en fusion dans un four à cuve

(84) Benannte Vertragsstaaten:
**AT BE CH DE DK ES FR GB IT LI NL SE**

(30) Priorität: **14.01.1994  AT  6394**

(43) Veröffentlichungstag der Anmeldung:
**19.07.1995   Patentblatt 1995/29**

(73) Patentinhaber: **VOEST-ALPINE INDUSTRIEANLAGENBAU GMBH**
**4020 Linz (AT)**

(72) Erfinder:
• **Ramaseder, Norbert, Dipl.-Ing.**
 **A-4020 Linz (AT)**
• **Dimitrov, Stefan, Dipl.-Ing. Dr.**
 **A-4031 Linz (AT)**
• **Pirklbauer, Wilfried, Dipl.-Ing. Dr.**
 **A-4481 Niederneukirchen 199 (AT)**

• **Schubert, Hermann, Ing.**
 **A-4040 Linz (AT)**

(74) Vertreter: **Kopecky, Helmut, Dipl.-Ing.**
 **Kopecky & Schwarz Patentanwälte**
 **Wipplingerstrasse 32/22**
 **1010 Wien (AT)**

(56) Entgegenhaltungen:
**EP-A- 0 548 041        DE-A- 2 427 360**
**DE-C- 3 609 923        FR-A- 2 611 876**
**US-A- 3 529 067**

• **PATENT ABSTRACTS OF JAPAN vol. 11, no. 222 (C-435) (2669) 18. Juli 1987 & JP-A-62 037 310 (ISHIKAWAJIMA HARIMA HEAVY IND CO LTD) 18. Februar 1987**

**Beschreibung**

Die Erfindung betrifft ein Verfahren zum Herstellen von Eisenschmelzen, insbesondere von Stahlschmelzen, durch chargenweises Einschmelzen von Eisenträgern in einem metallurgischen Gefäß mit Hilfe von zumindest zum Teil durch mindestens einen Lichtbogen eingebrachter Energie, wobei als Eisenträger Mischschrott und/oder Feinschrott und/oder Shredderschrott mit nur geringen organischen Anteilen (Eisenträger I) einerseits und Schrott mit weit höheren organischen Anteilen, wie Autoschrott, (Eisenträger II) andererseits eingesetzt werden.

Aus der DE-C 3 609 923 ist ein Verfahren und eine Vorrichtung zum fortlaufenden Schmelzen von Schrott zu Rohstahl bekannt, wobei die Wärme des Ofengases zum Erhitzen des Schrotts genutzt wird. Der Schrott wird in einem zentrisch auf dem Herdofen aufgesetzten Schacht vorgewärmt und zentral in den Herdofen eingebracht. Um den Schacht sind im Kreis Elektroden angeordnet, mit deren Hilfe der Schrott eingeschmolzen wird. Hierbei ist die Seitenwand des Herdofens einer sehr hohen Wärmebelastung ausgesetzt, da die Lichtbögen zwischen der zentrisch eingebrachten Schrottsäule und den Wänden des Herdofens brennen. Es kommt zu einem erhöhten Verschleiß der feuerfesten Auskleidung, woraus eine relativ kurze Lebensdauer des Herdofens resultiert. Weiters geht ein großer Teil der eingebrachten Energie durch Abstrahlung an die Ofenwände verloren.

Eine ähnliche Vorrichtung, bei der eine Schmelze chargenweise hergestellt wird, ist aus der US-A 2 382 534 bekannt.

Aus der EP-A-0548041 ist ein Elektro-Lichtbogenofen zum Einschmelzen von Schrott bekannt. Im Unterteil des Ofengefäßes ragen Graphitelektroden von der Seite hinein, wobei sich die Neigung der Elektroden und die radiale Entfernung der Ofengefäßmittelachse einstellen lassen.

Die Verwertung großer Mengen von stark mit organischen Bestandteilen verunreinigtem Schrott, wie er z.B. von Altautos und Haushaltsgeräten anfällt, ist aus Gründen des Umweltschutzes mit erheblichen Schwierigkeiten verbunden, wenn man nicht vor der Verwertung eines solchen Schrottes die organischen Anteile von diesem trennt, was jedoch sehr aufwendig und oft wirtschaftlich nicht vertretbar ist

Es ist bekannt, daß für die metallurgische Verarbeitung/Entsorgung von Altautoschrott bisher, trotz der Vielzahl entwickelter Konzepte (z.B. Entsorgung im herkömmlichen Elektro-Lichtbogenofen) mit zur Zeit bis maximal 50 % Autoschrottanteil im Einsatz in Form von Paket-, Scheren- und/oder Shredderschrott, im letzten Fall mit paralleler Zuführung der vorher getrennten Leichtfraktion, keine aus wirtschaftlicher Sicht zufriedenstellende Lösung gefunden wurde. Folgende Gründe sind dafür maßgebend:

a) Schlechte Nutzung (d.h. nur maximal 1/3 genutzt) des organischen Anteiles als Energiequelle für den Schmelzprozeß beim Einsatz von Autopaket- und/oder Autoscherenschrott bei Schachtofenverfahren (Kupolofen/Kombiofen, ISVS-Reaktor (ISVS = Integriertes-Schrott-Verwertungs-System: in Eiern Schrottschacht wird Schrott mit Erdgasbrennern geschmolzen, die Schmelze in einen Raffinator eingebracht), Elektro-Lichtbogenofen mit Schrottvorwärmschacht) bzw. hoher zusätzlicher Aufwand für die Zuführung der beim Schreddern anfallenden organischen Leichtfraktion (z.B. in einen Elektro-Lichtbogenofen) wegen ihrer hohen spezifischen Menge von ca. 250 kg Leichtfraktion/t Roh-Autoschrott.

b) Zur Herstellung von Rohstahl mit der erwünschten Zusammensetzung und Temperatur ist oft eine zweistufige Verfahrensroute bzw. eine aus zwei metallurgischen Gefäßen bestehende Anlage notwendig, wodurch die Stahlherstellungskosten ansteigen, wie z.B. beim:

- Kupol-/Kombiofen (da flüssiges Roheisen als Primärprodukt entsteht, ist eine zusätzliche Stahlerzeugungsstufe notwendig)
- ISVS-Reaktor (Reduktion einer hohen Menge eisenoxidreicher Schlacke sowie Aufheizen der sich bei Liquidustemperatur befindlichen Stahlschmelze aus dem KVA-Schacht in einem angeschlossenen Raffmator (vgl. BHM 134. Jahrgang (1989) Heft 7, Seiten 203 bis 207))

c) Große Abgasmengen (ca. 200 Nm$^3$/t Flüssigstahl bei Elektro-Lichtbogenöfen und bis zu 1800 Nm$^3$/t Flüssigstahl bei Kupolofen-Kombiofen bei jeweils ca. 50 %-Anteil an Autoschrott im Einsatz) bedingen aufwendige Anlagen zur Erfassung und Nachbehandlung der Abgase wegen der Dioxin-Problematik (z.B. bei herkömmlichem Elektro-Lichtbogenofen, gegebenenfalls Kupolofen/Kombiofen etc. bei geringerer Abgastemperatur) sowie zur Nutzung der physikalischen und chemischen Abgasenergie.

d) Erhöhter Feuerfestverschleiß (KVA-Schacht des ISVS-Reaktors, Kombiofen)

e) Durch mögliche Zn-/Alkali-Kreisläufe bedingte Ausscheidungen/Zuwachsungen in kälteren Bereichen bei Schachtofenverfahren mit geringerer Abgastemperatur (Kupolofen/Kombiofen etc.)

Die bisherigen metallurgischen Konzepte zur Verarbeitung von Altautoschrott im Vergleich zur alternativen Entsorgungsroute "Shreddern-Müllverbrennung" konnten daher nicht überzeugen.

Die Erfindung bezweckt die Vermeidung der oben genannten Nachteile und Schwierigkeiten und stellt sich die Aufgabe, ein Verfahren zur wirtschaftlichen metallurgischen Verwertung von stark mit organischen Bestandteilen verunreinigtem Schrott sowie eine Anlage zur Durchführung des Verfahrens zu schaffen, welche eine besonders effektive Nutzung der eingebrachten Organik als Energieträger unter weitgehender Schonung des metallurgischen Gefäßes ermöglichen.

Ein besonderes Ziel der Erfindung ist es, den Schrott nicht von den organischen Bestandteilen trennen zu müssen, sondern gemeinsam mit diesen einsetzen zu können und hierbei den Verbrauch anderer Energieträger (insbesondere von elektrischer Energie) für die Prozeßdurchführung möglichst einzusparen. Dabei soll außerdem die Bildung von kontaminierten, insbesondere mit Dioxinen und anderen Schadstoffen verunreinigten Prozeßgasen (Abgasen) vermieden werden.

Insbesondere sollen die spezifischen Betriebs- und Investitionskosten bei der Elektrostahlerzeugung vor allem durch geringeren Elektroenergieverbrauch und Verkürzung der Schmelz- bzw. Schmelzenfolgezeit im Vergleich zum konventionellen Lichtbogenschmelzverfahren niedrig sein. Weiters sollen bereits bestehende Elektrostahlwerksanlagen mit geringen Investitionen zur Durchführung des erfindungsgemäßen Verfahrens umgebaut werden können.

Diese Aufgabe wird erfindungsgemäß durch die Kombination folgender Merkmale gelöst:

a) Chargieren einer ersten, zumindest teilweise aus Eisenträgern I und gegebenenfalls Eisenträger II bestehenden Teilmenge des Gesamteinsatzes der Eisenträger unter Bildung eines Schüttkegels im Zentrumsbereich,

b) Schmelzen eines zentralen Kraters (41) in den von der ersten Teilmenge gebildeten Schüttkegel mit Hilfe zentrumsnahe eingebrachter Lichtbogenenergie,

c) Chargieren mindestens einer weiteren, zumindest teilweise von Eisenträgern II und gegebenenfalls Eisenträger I gebildeten Teilmenge in den zentralen Krater (41) mit anschließendem abermaligen Schmelzen eines zentralen Kraters und

d) vollständiges Einschmelzen der noch festen Eisenträger (22, 29) mit Hilfe zentrumsentfernter und wandnäher eingebrachter Lichtbogenenergie,

e) worauf der Abstich gegebenenfalls nach einem Frischen und/oder Feinen erfolgt.

Durch das erfindungsgemäße Chargieren der Eisenträger I und II in Teilmengen nehmen die Einsatzstoffe die über den Lichtbogen eingebrachte Energie unter Abschirmung der Gefäßwände während nahezu des gesamten Schmelzprozesses auf. Hierdurch ergibt sich eine beträchtliche Verminderung des Verschleißes der feuerfesten Auskleidung des metallurgischen Gefäßes sowie eine beträchtliche Verminderung der Wärmeverluste. In Kombination mit einer möglichst frühzeitigen Bildung einer Schaumschlacke werden diese Effekte noch verstärkt. Bei der erst gegen Ende des Schmelzprozesses erfolgenden Randzonenaufschmelzung kommt es infolge der Schaumschlacke ebenfalls zu keiner unmittelbaren Belastung der Gefäßwände durch die eingebrachte Lichtbogenenergie.

Eine hohe Wirtschaftlichkeit ist gegeben, wenn die erste Teilmenge ausschließlich von Eisenträgern I gebildet wird.

Zweckmäßig werden zur optimalen Ausnützung des Wärmeinhalts der Prozeßgase unter Vermeidung von Dioxinbildung die Eisenträger I vor dem Chargieren in das metallurgische Gefäß in einen Vorwärmschacht eingebracht, von aus dem metallurgischen Gefäß abgezogenen heißen Prozeßgasen umströmt und anschließend in das metallurgische Gefäß heiß chargiert, wogegen die Eisenträger II ohne Vorwärmung durch die Prozeßgase in das metallurgische Gefäß chargiert werden.

Eine weitere Einsparung an elektrischer Energie läßt sich dadurch erzielen, daß das Schmelzen der ersten Teilmenge durch Einblasen eines sauerstoffhältigen Gases unterstützt wird.

Bevorzugt wird das Schmelzen der der ersten Teilmenge nachfolgend chargierten Teilmenge(n) durch Einblasen eines sauerstoffhältigen Gases zumindest unterstützt.

Ist der Organik-Anteil im Schrott genügend hoch (z.B. mehr als 6 Gew.% in bezug auf den gesamten Metalleinsatz, was bei einem Autopaketschrottanteil von mehr als 30 Gew.% in der Regel der Fall ist), erfolgt das Schmelzen der der ersten Teilmenge nachfolgend chargierten Teilmenge(n) vorteilhaft ausschließlich durch Einblasen eines sauerstoffhältigen Gases, also ohne weitere elektrische Energie.

Vorzugsweise wird beim Abstich eine Restschmelze in dem metallurgischen Gefäß belassen, und die erste Teilmenge in die Restschmelze chargiert.

Zur Herstellung von Stahl werden Schlackenbildner und gegebenenfalls Kohlenstoffträger chargiert, vorzugsweise in Teilmengen.

Zweckmäßig wird eine Bodenspülung mit Inertgas durchgeführt.

Gemäß einer bevorzugten Variante wird ein sauerstoffhältiges Gas über mindestens eine Ein-/Aufblaslanze und/oder Düse bzw. Unterbaddüse in die Schmelze eingeblasen.

Eine optimale Ausnutzung des Energieinhaltes entstehender Prozeßgase ist gegeben, wenn Prozeßgase durch Zuführen eines sauerstoffhältigen Gases in die und/oder auf die Schaumschlacke und/oder oberhalb derselben in das metallurgische Gefäß und/oder in den Vorwärmschacht nachverbrannt werden.

Auch die Zuführung feinkörniger Einsatzstoffe, wie Eisenträger, Kohlenstoffträger (wie aufbereitete organische Leichtfraktion) und/oder Schlackenbildner, ist vorzugsweise vorgesehen, wobei diese Einsatzstoffe zweckmäßig durch mindestens eine Ein-/Aufblaslanze und/oder Düse bzw. Unterbaddüse und/oder Hohlelektrode unter Verwendung eines Trägergases in das Metallbad eingeblasen werden. Als feinkörnige Eisenträger kommen z.B. Eisenkarbid, Eisenschwamm-Unterkorn, Hüttenstaub und gegebenenfalls Erz in Betracht, als feinkörnige Kohlenstoffträger Feinkohle, Feinkoks und aufbereitete organische Leichtfraktion.

Vorteilhaft wird die Vorwärmtemperatur der Eisenträger I durch Wahl der Länge der Verweilzeit der Eisenträger I im Vorwärmschacht eingestellt.

Vorzugsweise wird die Vorwärmtemperatur der Eisenträger I durch Wahl von Menge, Zusammensetzung und Temperatur der aus dem metallurgischen Gefäß abgezogenen Prozeßgase eingestellt, wobei zweckmäßig durch eine Nachverbrennung der Prozeßgase eine effektive Vorwärmung unter optimaler Ausnutzung des Wärmeinhaltes der Prozeßgase erzielbar ist.

Gemäß einer vorteilhaften Variante wird zusätzlich Eisenschwamm in heißem oder kaltem Zustand in das metallurgische Gefäß chargiert, vorzugsweise ebenfalls in Teilmengen, aus einem vom Vorwärmschacht getrennten, gasdichten Chargierschacht oder auch über den Vorwärmschacht gemeinsam mit Eisenträgern I. Wenn den Eisenträgern I Eisenschwamm zugesetzt wird, muß dieser aus Gründen der Reoxidation in brikettierter Form (HBI) eingesetzt werden.

Eine Anlage zur Durchführung des erfindungsgemäßen Verfahrens, mit der eine besonders kurze Schmelzenfolgezeit erzielbar ist und keine allzu hohen Investitionskosten - insbesondere beim Umbau bestehender Elektro-Lichtbogenöfen - erfordert, ist durch die folgende Kombination von Merkmalen gekennzeichnet:

- ein Eisenschmelze aufnehmendes metallurgisches Gefäß,
- einen ortsfesten, Eisenträger I aufnehmenden Schacht, der in das metallurgische Gefäß über eine im Deckel angeordnete und mit einer Absperreinrichtung versehene Öffnung mündet,
- mindestens einen seitlich zum Schacht benachbart angeordneten Chargierschacht zur Aufnahme von Eisenträgern II, der über den Deckel des metallurgischen Gefäßes mittels einer Absperreinrichtung in das metallurgische Gefäß mündet, und
- in das metallurgische Gefäß von oben ragende Elektroden, die von einer in Richtung zum Gefäßzentrum gerichteten Position A in eine näher zur Wand des metallurgischen Gefäßes gerichteten Position C schwenkbar sind.

Vorzugsweise sind der die Eisenträger I aufnehmende Schacht sowie seine Öffnung im Zentrumsbereich des Deckels angeordnet.

Eine bevorzugte Ausführungsform ist durch mindestens einen weiteren seitlich zum Schacht benachbart angeordneten Chargierschacht zur Aufnahme von Schlackenbildnern und/oder Eisenschwamm und/oder Kohlenstoffträgern, der über den Deckel des metallurgischen Gefäßes mittels einer Absperreinrichtung in das metallurgische Gefäß mündet, gekennzeichnet.

Zweckmäßig ist der untere Teil des Chargierschachtes mit einer schrägen, zum Zentrum des metallurgischen Gefäßes gerichteten Auslaufschurre versehen.

Zur Erzielung einer effizienten Vorwärmung der Eisenträger I und Vermeidung einer Vorwärmung der Eisenträger II ist vorteilhaft die an der Öffnung angeordnete Absperreinrichtung des die Eisenträger I aufnehmenden Schachtes gasdurchlässig und eine Gasableitung am oberen Schachtende des Eisenträger I aufnehmenden Schachtes vorgesehen und sind an den Einmündungen der Eisenträger II bzw. Schlackenbildner und/oder Kohlenstoffträgern und/oder Eisenschwamm etc. aufnehmenden Schächte gasundurchlässige Absperreinrichtungen vorgesehen.

Vorzugsweise ist das metallurgische Gefäß kippbar.

Gemäß einer bevorzugten Ausführungsform ist das metallurgische Gefäß heb-, senk- und verfahrbar.

Eine bevorzugte platzsparende Ausführungsform, die auch durch Umbau eines bestehenden herkömmlichen Elektro-Lichtbogenofens in kostengünstiger Weise verwirklicht werden kann, ist dadurch gekennzeichnet, daß der die Eisenträger I aufnehmende Schacht zentral angeordnet ist und daß mehrere Elektroden die Öffnung des Schachtes umgeben, vorzugsweise radialsymmetrisch, und durch den Deckel in das Innere des metallurgischen Gefäßes ragen.

Hierbei sind zweckmäßig die Elektroden in einer zum metallurgischen Gefäß radialgerichteten Vertikalebene schwenkbar, vorzugsweise über einen Bereich, von der Vertikalen ausgehend in eine in Richtung zum Zentrum des metallurgischen Gefäßes unter 30 ° zur Vertikalen gerichteten Position bis in eine um max. 10 ° von der Vertikalen abweichende, nach außen gerichtete Position.

Vorzugsweise sind von der Seite und/oder durch den Deckel in das metallurgische Gefäß einbringbare Blaslanzen und/oder Düsen für ein sauerstoffhältiges Gas vorgesehen.

Im die Eisenträger I aufnehmenden Schacht ist zweckmäßig zur Temperatureinstellung der Eisenträger I mindestens eine Düse für die Zuführung von sauerstoffhältigem und/oder stickstoffhältigem Gas vorgesehen.

Eine einfache Betriebsweise der erfindungsgemäßen Anlage ist dann gegeben, wenn das metallurgische Gefäß auf Hubzylindem gegenüber dem Fundament abgestützt ist, vorzugsweise auf drei Hubzylindem. Hierbei ist vorteilhaft das metallurgische Gefäß in Schmelzposition mittels seitlich in dessen Wand einsetzbarer Verriegelungsbolzen fixierbar, wobei mindestens zwei Verriegelungsbolzen unter Bildung einer Schwenkachse für das metallurgische Gefäß (z.B. zum Abstich) zueinander fluchtend angeordnet sind, und die Verriegelungsbolzen mittels einer Stelleinrichtung aus einer in die Wand des metallurgischen Gefäßes eingreifenden Verriegelungsposition in eine zurückgezogene, das metallurgische Gefäß freigebende Position und umgekehrt bringbar sind.

Vorteilhaft ist die Anlage zur Erzielung einer hohen Verfügbarkeit bei möglichst geringen Investitionskosten gekennzeichnet durch einen bis unterhalb des metallurgischen Gefäßes fahrbaren Wagen, auf dem wahlweise eine Pfanne oder das metallurgische Gefäß selbst absetzbar und mittels des Wagens verfahrbar sind.

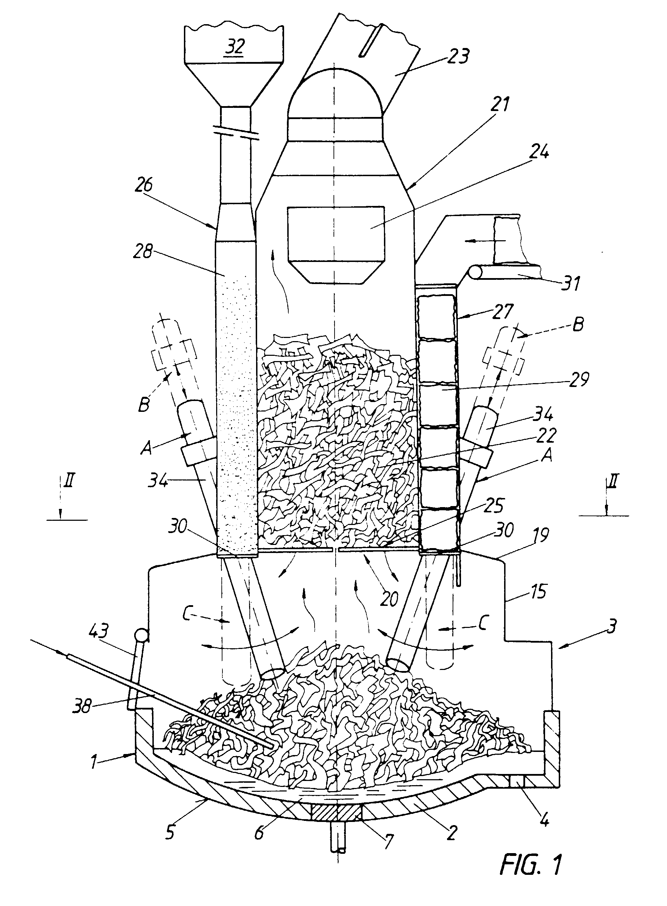

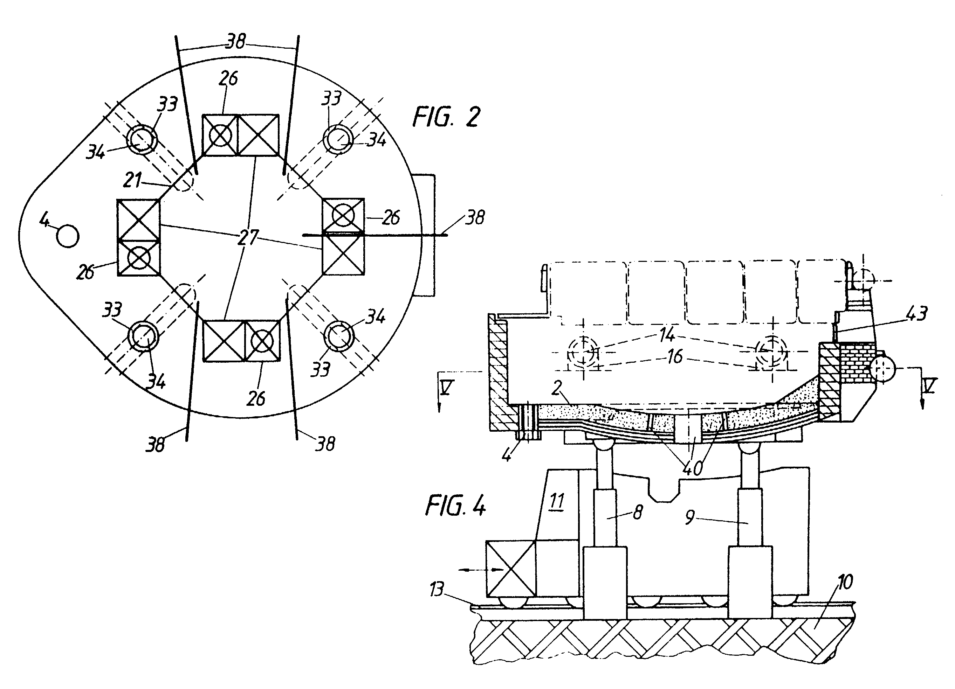

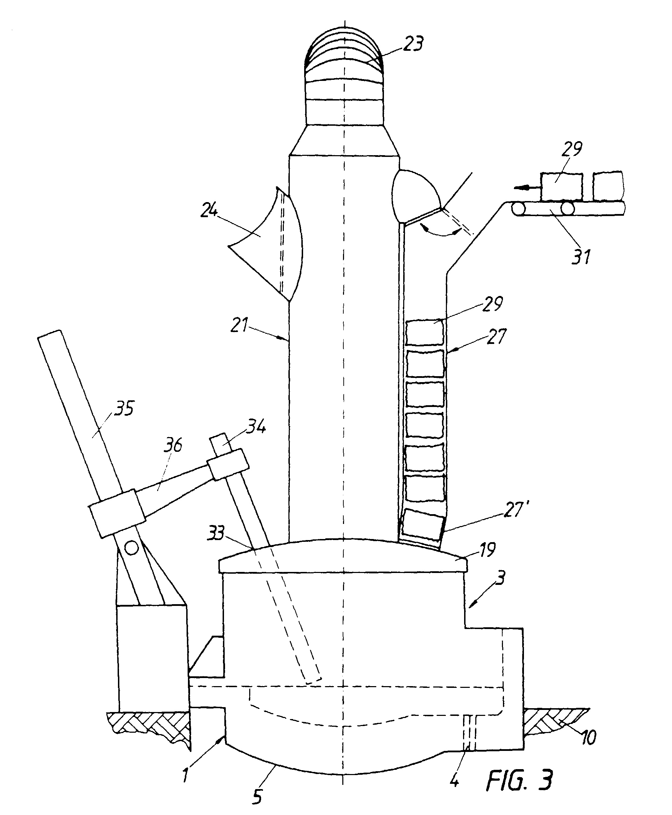

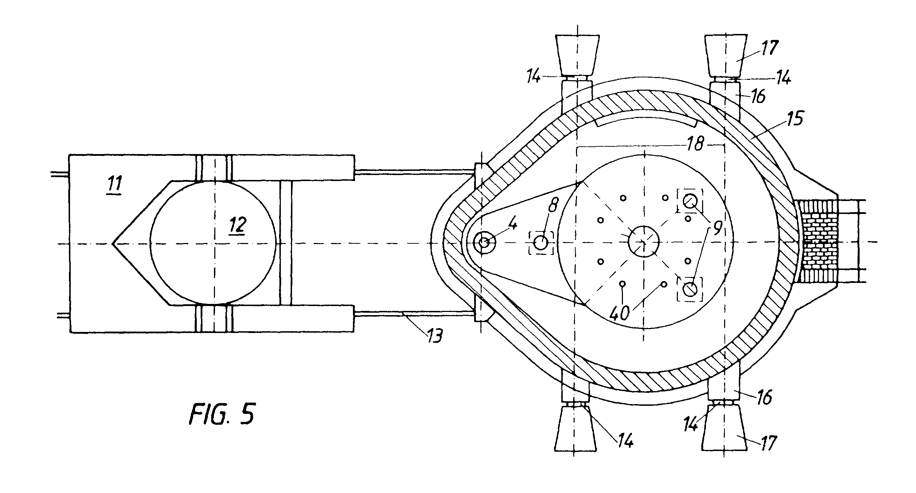

Die Erfindung ist nachfolgend anhand der Zeichnung näher erläutert, wobei Fig. 1 einen Vertikal-Achsschnitt durch eine erfindungsgemäße Anlage und Fig. 2 einen gemäß der Linie II-II der Fig. 1 geführten Schnitt in schematischer Darstellung veranschaulichen. Fig. 3 zeigt eine Seitenansicht der erfindungsgemäßen Anlage. Die Fig. 4 und 5 veranschaulichen die Abstützung des metallurgischen Gefäßes gegenüber dem Fundament, wobei Fig. 4 einen Vertikal-Achsschnitt durch das metallurgische Gefäß und Fig. 5 einen gemäß der Linie V-V der Fig. 4 geführten Schnitt zeigen. Die Figurenreihe 6 a bis 6h veranschaulicht einen Ablauf des erfindungsgemäßen Verfahrens in schematischer Darstellung.

Mit 1 ist ein mit einer feuerfesten Auskleidung 2 versehenes Ofengefäß eines Elektrolichtbogenofens 3 bezeichnet, das mit einem Erkerabstich 4 versehen ist. Der Boden 5 des Elektrolichtbogenofens 3 ist zur Aufnahme der Schmelze 6 gewölbt ausgebildet. Er weist gegebenenfalls eine Bodenanode 7 auf.

Wie aus den Fig. 4 und 5 ersichtlich ist, ist das Ofengefäß 1 über seinen Boden 5 mittels dreier Druckmittelzylinder 8, 9 gegenüber dem Fundament 10 abgestützt Es kann mit Hilfe der Druckmittelzylinder 8, 9 gehoben und gesenkt werden, beispielsweise auf einen unterhalb des Ofengefäßes 1 verfahrbaren Wagen 11, auf dem auch eine Pfanne 12 absetzbar ist, aufgesetzt und mit Hilfe des Wagens 11 entlang von Schienen 13 horizontal verfahren werden. Hierdurch wird die teilweise Befüllung des Ofengefäßes 1 des Elektrolichtbogenofens 3 über einen Schrottkorb ermöglicht, was insbesondere bei schwerem und sperrigem Schrott, wie Brammen- und/oder Knüppelresten, Paketschrott etc. von Vorteil ist. Weiters lassen sich hierdurch Reparaturen in einfacher Weise durchführen, und es kann auch das Ofengefäß 1 bei Auftreten eines Schadens besonders schnell ausgewechselt werden.

Der Wagen 11 ist so gestaltet, daß er entweder die Pfanne 12 unterhalb des Abstiches 4 bringen oder das Ofengefäß 1 aufnehmen kann. Der Wagen 11 ist im Grundriß U-förmig ausgebildet. Dadurch ist es möglich, den Wagen 11 ohne Pfanne vollständig unter das Ofengefäß 1 zu bewegen. Der Elektrolichtbogenofen, d. h. sein Ofengefäß 1, ist mittels vier Verriegelungsbolzen 14, die in an seiner Seitenwand 15 vorgesehene Tragkonsolen 16 einsetzbar sind, in angehobener Lage - der Betriebsposition - fixierbar. Diese Verriegelungsbolzen 14 sind mittels Betätigungseinrichtungen 17, wie beispielsweise Druckmittelzylindern, in Ausnehmungen der Tragkonsolen 16 einrückbar bzw. aus diesen rückziehbar. Wie aus Fig. 5 ersichtlich ist, fluchten jeweils zwei der Verriegelungsbolzen 14, wodurch diese Bolzen Schwenkachsen 18 bilden, um die das Ofengefäß 1 schwenkbar ist, soferne jeweils zwei fluchtende Verriegelungsbolzen 14 in die Ausnehmungen der korrespondierenden Tragkonsolen 16 eingesetzt sind. Die Schwenkbewegung selbst kann durch Beaufschlagen der entsprechenden Druckmittelzylinder 8 durchgeführt werden.

Der Elektrolichtbogenofen 3 weist einen heb- und senkbaren Deckel 19 auf, der auf dem Ofengefäß 1 ruht Der Deckel 19 ist mit einer zentralen Öffnung 20 versehen, oberhalb der ein Schrottvorwärmschacht 21 für Mischschrott 22 (Eisenträger I) vorgesehen ist. Dieser Schrottvorwärmschacht 21 ist am oberen Ende an eine Gasabzugsleitung 23 angeschlossen. Eine Chargieröffnung 24 zum Einbringen des Mischschrottes 22 in den Schrottvorwärmschacht 21 befindet sich knapp darunter. Am unteren Ende des Schrottvorwärmschachtes 21 ist eine gasdurchlässige und zweckmäßig wassergekühlte Absperreinrichtung 25 vorgesehen, die beispielsweise von schwenkbaren oder verschiebbaren Roststäben gebildet ist und die Öffnung 20 überdeckt.

Mit Hilfe dieser Absperreinrichtung 25 kann der im Schrottvorwärmschacht 21 eingebrachte Mischschrott 22 zurückgehalten oder in das Ofengefäß 1 chargiert werden. Der ortsfeste Schrottvorwärmschacht 21 ist von einer Stahlkonstruktion, die nicht näher veranschaulicht ist, getragen. An dieser Stahlkonstruktion kann auch der Deckel 19 heb- und senkbar gelagert sein.

Wie insbesondere aus Fig. 2 zu erkennen ist, sind seitlich direkt benachbart zum Schrottvorwärmschacht 21 Chargierschächte 26, 27 einerseits zum Einbringen von Zuschlagstoffen 28 und/oder Kohlenstoffträgern und andererseits zum Einbringen von mit organischen Bestandteilen verunreinigten Schrott 29 (Eisenträger II) vorgesehen. Diese Chargierschächte 26, 27 sind ebenfalls mit wassergekühlten Absperreinrichtungen 30 an ihren Einmündungen in das Ofengefäß 1 versehen. Die Absperreinrichtungen 30 des Chargierschachtes 27, der den mit organischen Anteilen verunreinigten Schrott - es handelt sich beim dargestellten Ausführungsbeispiel um Altautopaketschrott - aufnimmt, sind gasundurchlässig, um eine Erwärmung durch die Abgase und dadurch Entgasung der Organik dieses Schrotts 29 zu vermeiden. Die Autoschrottpakete 29 werden über Fördereinrichtungen, wie Rutschen oder Förderbänder 31, angeliefert. Die Zuschläge bzw. Kohle, Koks etc. gelangen von Vorratsbunkern 32 über Rutschen etc. zu den Chargierschächten 26. Die Auslegung der Chargierschächte 26, 27, d. h. deren Anzahl, Dimensionierung und Anordnung erfolgt in Abhängigkeit von der Art des Chargierguts. Die Chargierschächte 26, 27 sind an ihren unteren Enden mit jeweils einer gegen das Zentrum des Ofengefäßes 1 gerichteten Auslaufschurre 27' versehen. Über einen oder mehrere der gasdicht gegen das Ofengefäß 1 abgeschlossenen Chargierschächte 26, 27 kann zusätzlich Eisenschwamm chargiert werden.

In der Ausbildung der Schächte 21, 26, 27 bestehen große Variationsmöglichkeiten. Die Schächte können als "Rohr in Rohr"-Konstruktion (mit beliebigen Rohrquerschnitten) ausgebildet sein, wobei das Innenrohr den Vorwärmschacht 21 bildet und der Ringraum um das Innenrohr zur Bildung mehrerer Chargierschächte unterteilt ist, z.B. durch radial ausgebildete Trennwände. Diese Trennwände können ortsfest oder beweglich, gasdicht oder gasdurchlässig sein. Gemäß einer anderen Variante könnten die Schächte von einem einzigen Rohr mit entsprechenden Innen-Trennwänden (z.B. kreuzförmig angeordneten Trennwänden) gebildet sein.

Erfindungsgemäß sind von oben durch Deckelöffnungen 33 in das Innere des Ofengefäßes 1 ragende, selbstverzehrende Elektroden 34 vorgesehen, die vorzugsweise radialsymmetrisch angeordnet sind. Die Elektroden 34 sind über Hubmaste 35 und Tragarme 36 am Fundament 10 abgestützt. Sie sind mittels der Hubmaste 35 heb- und senkbar und in jeweils einer Vertikalebene, die vorzugsweise radial ausgerichtet ist, mindestens innerhalb eines Neigungswinkels von 0 bis 30° gegenüber der Vertikalen schwenkbar, und zwar in Richtung zum Zentrum des Ofengefäßes 1 hin. Beim Schmelzen der eingebrachten Eisenträger ist der Neigungswinkel der Elektroden 34 meist auf etwa 20° eingestellt; er kann für jede einzelne Elektrode 34 unterschiedlich eingestellt bzw. geregelt werden. Die Elektroden 34 können vorzugsweise auch über die Vertikale hinaus nach außen gegen die Wand 15 des Ofengefäßes 1 hin geschwenkt werden, und zwar um etwa 5 bis 10° gegenüber der Vertikalen.

Der Elektrodenwechsel wird bevorzugt in der Senkrechtstellung der Elektroden 34 mit Hilfe eines Kranes durchgeführt. Eine Elektrodennachnippelung erfolgt an einem Nippelstand oder direkt beim Elektrolichtbogenofen 3. Die Anzahl der vewendeten Graphitelektroden 34 beträgt vorzugsweise zwei bis vier oder mehr, mindestens ist jedoch eine Graphitelektrode vorgesehen.

Zur Optimierung der Schmelzenführung sind erfindungsgemäß zum Ein- und/oder Aufblasen eines sauerstoffhältigen Gases ($O_2$, Luft, $CO_2$, $H_2O$ etc.) oder deren Gemischen seitlich und/oder durch den Deckel 19 in das Ofengefäß 1 einbringbare Lanzen 38 und/oder (hier nicht dargestellte) Düsen, gegebenenfalls auch Unterbaddüsen, vorgesehen.

Zum Ein- und/oder Aufblasen von feinkörnigen Materialien (z. B. Kohlenstoff und/oder Eisenträgern und/oder Schlackenbildnern) sind vorzugsweise weitere Einblaslanzen 39 und/oder Düsen unterschiedlicher Anordnung vorgesehen. Diese feinkörnigen Materialien können auch über eine (oder mehrere) Elektrode(n) 34, die dann als Hohlelektrode(n) ausgebildet ist (sind), eingebracht werden. Mit Hilfe dieser feinkörnigen Materialien wird auch eine möglichst frühzeitige Bildung einer Schaumschlacke ermöglicht. Weiters können erfindungsgemäß noch Hilfsbrenner (gegebenenfalls als kombinierte Jet-Brenner bzw. Lanzen) sowie Nachverbrennungslanzen/Düsen für Sauerstoff, Luft und andere oxidierende Gase bzw. Gasgemische an mehreren Stellen, die in unterschiedlichen Ebenen angeordnet sein können, vorgesehen sein, gegebenenfalls auch im Schrottvorwärmschacht 21. Der Boden 5 des Ofengefäßes 1 ist zweckmäßig weiters mit Bodendüsen und/oder -steinen 40 für eine Inertgasspülung ($N_2$, Ar) ausgestattet.

Das erfindungsgemäße Verfahren zur Verarbeitung/Entsorgung von Altautoschrott 29 im Elektrolichtbogenofen 3 mit aufgesetztem Schrottvorwärmschacht 21, Chargierschächten 26, 27 und schwenkbaren, schrägen Graphitelektroden 34 ermöglicht die Verarbeitung von Altautoschrott in Form von Autopaketen 29 und/oder Autoscherenschrott, welche die organischen Bestandteile des Autoschrottes mitenthalten. Die Autoschrottpakete 29 bzw. der Autoscherenschrott werden in kaltem Zustand (ohne Vorwärmung) in das Ofengefäß 1 des Elektrolichtbogenofens 3 über die Chargierschächte 27 zugeführt.

Ein erfindungsgemäßer Prozeßablauf beim Einsatz von Altautoschrottpaketen 29 und Mischschrott 22 geht z.B. wie folgt vor sich:

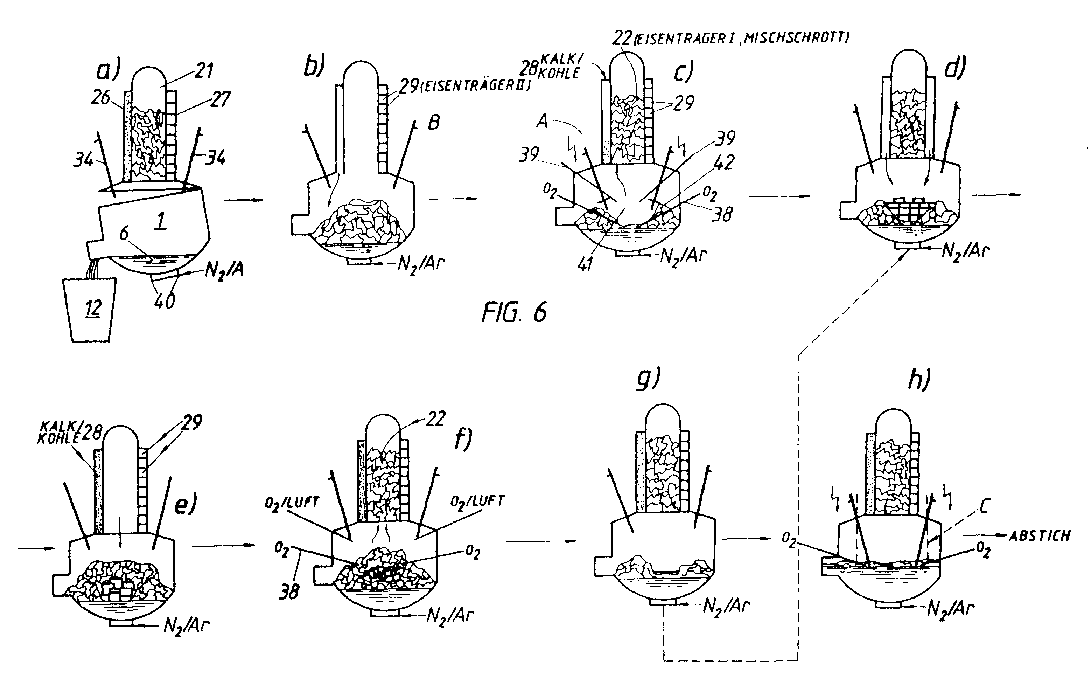

Zu Beginn wird das Ofengefäß 1 (in dem beim DC-Betrieb vom vorigen Abstich eine Restschmelzenmenge 6 verbleibt, Fig. 6a) mit vorgewärmtem Mischschrott 22 aus dem Schrottvorwärmschacht 21 sowie Kalk 28 und Kohle und gegebenenfalls Eisenschwamm aus den Chargierschächten 26 befüllt (Fig. 6 b). Fallweise (z. B. beim Ofenstart) kann auch Mischschrott 22 in das seitlich, außerhalb des Deckels 19 ausgefahrene Ofengefäß 1 über einen Schrottkorb oder eine Schrottmulde chargiert werden.

Danach werden die Elektroden 34 bei etwa maximaler Schrägstellung (Position A) eingefahren, so daß nach einer kurzen Schmelzperiode unter leichtem Schwenken der Elektroden 34 ein breiter Schmelzkrater 41 in der Mitte des Mischschrottes im Ofengefäß 1 (und somit direkt unterhalb des aufgesetzten Schrottvorwärmschachtes 21 und der Chargierschächte 26, 27) gebildet wird (Fig. 6 c). Die erfindungsgemäß bevorzugten Abmessungen des Schmelzkraters 41 sind:

- Kraterdurchmesser - etwa 60 - 80 % des Innendurchmessers des Ofengefäßes 1, so daß im wandnahen Bereich eine ungeschmolzene, wallartige Schrottschicht 42 als Wärme-(Strahlungs-)schutz für die Ausmauerung 2 bzw.

wassergekühlten Paneele der Wand 15 verbleibt.

- Kratertiefe - in Abhängigkeit von der Ofenauslegung (Größe und Geometrie) zwischen 500 und 1000 mm, jedoch unter der Zielsetzung, daß sich am Boden des Kraters 41 nur wenig Eisenschmelze befindet.

Nach der Ausbildung des gewünschten Schmelzkraters 41 werden die Elektroden 34 bei abgeschalteter Stromzufuhr (power-off) hochgefahren (Position B). Anschließend wird der Schmelzkrater 41 mit

- Stückkalk über einen oder mehrere Chargierschächte 26 (für eine Basizität der Schmelzschlacke B = %CaO/%SiO$_2$ = 1,5 - 2,0)
- Autoschrottpaketen 29 über einen oder mehrere Chargierschächte 27 und/oder eine, z. B. durch die Schlackentür 43 einführbare und kippbare - hier nicht dargestellte - Chargiervorrichtung (z. B. Mulden, Kipper) bzw. sonstige Einrichtungen (z. B. eine oder mehrere Seitentür(en) und/oder Seitenkammer(n) im Ofengefäß mit Stoß-/Transportvorrichtung für die Autopaketzuführung) (Fig. 6 d) und
- vorgewärmtem Mischschrott 22 über den aufgesetzten Schrottwärmschacht 21 (Fig. 6 e)

in der erwähnten Reihenfolge befüllt, wobei ein erfindungsgemäß bevorzugtes Gewichtsverhältnis Autoschrottpakete/Mischschrott im Schmelzkrater 41 ca. 1 beträgt.

Unmittelbar danach wird die Beschickung im Schmelzkrater 41 ohne Verwendung elektrischer Energie geschmolzen. Dies erfolgt etwa nach dem Prinzip des Schrottschneidens durch Einblasen von gasförmigem Sauerstoff in den unteren Kraterbereich - über mehrere Lanzen 38 (z. B. selbstverzehrende Rohre etc.), welche durch die Ofenwände 15 und bezüglich des Schmelzkraters 41 etwa radialsymmetrisch eingeführt werden können (Fig. 6 f). Auch das Einblasen von O$_2$ über hier nicht dargestellte, geschützte Unterbaddüsen des Ofengefäßes 1 kann erfindungsgemäß durchgeführt werden.

Nach jeder erneuten Ausbildung eines Schmelzkraters 41 (Fig. 6 g) wird die beschriebene Chargier- und Schmelzprozedur (Fig. 6 d bis 6 g) möglichst ohne Anwendung elektrischer Energie einige Male wiederholt, bis der gesamte Schrotteinsatz dem Ofengefäß 1 zugeführt ist. Dabei werden die entstehenden Prozeßgase durch den aufgesetzten Schrottvorwärmschacht 21 abgezogen. Während ihres Aufstiegs werden diese durch die örtlich gezielte Zuführung von O$_2$ und/oder Luft (Sekundärluft) über mehrere Lanzen-/Düsen 39 (Fig. 6c, 6f) im Ofengefäß 1 und gegebenenfalls im Schrottvorwärmschacht 21 weitgehend, auch unter Berücksichtigung der maximal zulässigen Vorwärmtemperatur des Schrottes, nachverbrannt (CO zu CO$_2$ bzw. H$_2$ zu H$_2$O), so daß auch Nachverbrennungsgrade ($\eta_{\rho C}^{\Sigma} = \eta_{\rho C}^{CO|CO_z} + \eta_{\rho C}^{H_z/H_zO}$) von mehr als 50 % erreicht werden können.

Die beim Schmelzprozeß unter Einsatz von Eisenträgem II, wie Autopaketschrott, entstehende Schlacke ist wegen

- ihrer chemischen Zusammensetzung und verhältnismäßig hohen spezifischen Menge und
- der sehr intensiven Prozeßgasbildung

insbesondere im Bereich des Schmelzkraters 41 stark schäumend und ermöglicht somit die Erzielung einer hohen Nachverbrennung der Prozeßgase sowie einer guten Wärmenutzung im Bereich des Schmelzkraters 41. Ab einem gewissen Füllungsgrad des Ofengefäßes 1 (etwa nach Einschmelzen von ca. 2/3 des gesamten Metalleinsatzes) wird eine Teilmenge der Schmelzschlacke von Zeit zu Zeit durch die Schlackentür 43 abgestochen (ggf. mit Hilfe von Lanzen, z. B. vor/während einer Chargierprozedur) und somit die Menge der im Ofengefäß 1 verbleibenden Restschlacke geregelt.

Kurz nach der letzten Schrottzugabe werden die Elektroden 34 abgesenkt und die Lichtbögen gezündet. Bei einer Schaumschlackenfahrweise unter O$_2$-Zufuhr wird zunächst - bei geringem Neigungswinkel der Elektroden 34 (Position C) - der Schrott im wandnahen Bereich des Ofengefäßes 1 niedergeschmolzen (Fig. 6 h). Anschließend wird die Schmelze 6 während einer Flachbadperiode unter Schaumschlacke (gegebenenfalls unter Zugabe von Eisenschwamm und Kohle) durch O$_2$-Einblasen über Lanzen 38 und/oder Unterbaddüsen und mit Hilfe der Elektroden 34 (power-on) auf die zum Abstich erforderliche Zusammensetzung und Temperatur gebracht, worauf der Abstich (Fig. 6 a) - unter Belassen einer Restschmelzenmenge 6 im Ofengefäß 1 - erfolgen kann.

Prinzipiell können vor dem Chargieren der Eisenträger II Eisenträger I auch in mehr als einer einzigen Teilmenge chargiert werden; ebenso ist es möglich, zwischendurch eine lediglich Eisenträger I enthaltende Teilmenge zu chargieren. Das erfindungsgemäße Verfahren ermöglicht diesbezüglich verschiedene Variationen, die in Abhängigkeit der zur Verfügung stehenden Mengen an Eisenträger I und II wählbar sind.

Ausführungsbeispiel

Anhand eines Ausführungsbeispieles ist nachstehend das erfindungsgemäße Verfahren zur Verarbeitung/Entsorgung von Autoschrott in Form von Altautoschrottpaketen 29 näher erläutert.

Die zu verarbeitenden (vorhandenen) Altautoschrottpakete 29 besitzen etwa die Form eines Würfels mit einer Kantenlänge von ca. 400 - 450 mm. Das durchschnittliche Gewicht eines Autoschrottpaketes 29 beträgt ca. 250 kg.

Im konkreten Fall wird neben den Autoschrottpaketen 29 auch Mischschrott 22 eingesetzt, wobei der Metalleinsatz aus 40 % Autopaketschrott und 60 % Mischschrott besteht. Die chemische Zusammensetzung dieser Schrottarten ist aus Tafel 1 ersichtlich.

Zur Durchführung des Verfahrens wird ein 100-t-DC-Elektrolichtbogenofen 3 verwendet, der folgenderweise ausgestattet ist:

- Trafoleistung: 80 MVA;
- 4 Stk. Graphitelektroden 34 ($\varnothing$ = 350 mm, innerhalb eines Neigungswinkels von -5 bis max. +30 ° in der jeweiligen Vertikalebene ausschwenkbar), und eine Bodenanode 7.
- Ein Schrottvorwärmschacht 21 zur Vorwärmung und zum Chargieren des Mischschrottes 22; bei einer nutzbaren Schachthöhe von 4 m und einem, bezüglich dieser konstanten, oktogonalen Schachtquerschnitt (2,4 - 2,5 m lichte Weite) beträgt das gesamte Nutzvolumen des Schrottvorwärmschachtes 21 etwa 20 m$^3$ bzw. sein Fassungsvermögen ca. 15 t Mischschrott.
- 4 Stk. kombinierte Chargierschächte 26, 27 mit einer, bezüglich Schrottvorwärmschacht 21, Elektroden 34 und Ofengefäß 1 symmetrischen Anordnung; Ausführung der Chargierschächte 26, 27 als Doppelschächte für die voneinander getrennte/unabhängige Zuführung von Altautoschrottpaketen 29 sowie Zuschlägen 28 und/oder Kohlenstoffträgern (z. B. Kalk und/oder Kohle-/Koksgruß); bei einer Höhe der Chargierschächte 26, 27 von 3,5 m beträgt der Querschnitt der Autoschrottpaket-Chargierschächte 27 600 x 600 mm bzw. der Kalk/Kohle-Chargierschächte 26 600 x 300 mm.
- 5 Stk. Sauerstofflanzen 38 (eine Lanze 38 durch die Schlackentür 43 und vier Lanzen 38 durch die Seitenwände 15 des Ofengefäßes 1 - alle aus selbstverzehrenden Stahlrohren).

Der erfindungsgemäße Schmelzablauf erfolgt folgendermaßen:

Nach Abstich des Stahles der vorhergehenden Charge werden zunächst 25 t Mischschrott 22, 500 kg Kalk 28 und 150 kg Kohle in das Ofengefäß 1 des Elektrolichtbogenofens 3, und zwar auf den bestehenden Stahlsumpf 6, zugegeben. Das Chargieren des Mischschrottes 22 erfolgt durch den Schrottvorwärmschacht 21 in zwei Teilmengen zu je 12 - 13 t, wobei die erste Portion bereits während der letzten Schmelze vorgewärmt wurde. Anschließend wird der Schrottvorwärmschacht 21 mit 8 t Mischschrott 22 befüllt. Kohle und/oder Kalk wird durch die Chargierschächte 26 chargiert.

Danach wird mit Hilfe der Elektroden 34 unter Einblasen von ca. 150 Nm$^3$ O$_2$ über eine oder mehrere Lanzen 38 etwa die Hälfte des Mischschrotthaufens (ca. 13 t), angefangen von der Haufenmitte (Elektrodenposition A, Neigungswinkel der Elektroden 34 15 bis 25 °) niedergeschmolzen, und zwar so, daß ein ca. 3,5 - 4,0 m breiter und etwa 1,0 m tiefer Schmelzkrater 41 im Mischschrott 22 entsteht.

Das Erschmelzen des Schmelzkraters 41 ist nach etwa 5 - 6 min abgeschlossen (bei ca. 1 min mit 25 MW und ca. 5 min mit 60 MW für die Zuführung der erforderlichen Schmelzenergie von ca. 5500 kWh).

Anschließend werden die Elektroden 34 in die Elektrodenposition B hochgefahren (power-off) und der Schmelzkrater 41 durch Öffnen der wassergekühlten Absperreinrichtungen 25 und 30 aller Chargierschächte 26 und 27 und des Vorwärmschachtes 21 in der erwähnten Reihenfolge mit 800 kg Stückkalk 28, 8 t Autoschrottpaketen 29 (= 32 Pakete x 250 kg) und 8 t Mischschrott 22 befüllt (die gleichen Mengen dieser Einsatzstoffe werden dann wieder in die dafür vorgesehenen Chargierschächte 26, 27 bzw. den Vorwärmschacht 21 nachchargiert). Unmittelbar danach - etwa 9 min lang - wird ca 1550 Nm$^3$ Sauerstoff über die fünf Lanzen 38 unterhalb und/oder zwischen den Autoschrottpaketen 29 in den Schmelzkrater 41 eingeblasen. Die durchschnittlich zugeführte Sauerstoffmenge pro Lanze 38 beträgt ca. 310 Nm$^3$, bzw. die durchschnittliche Einblasgeschwindigkeit pro Lanze ca. 35 Nm$^3$O$_2$/min. Infolge dieser sehr hohen Sauerstoffbeaufschlagung wird der Autopaketschrott durch den Sauerstoffstrahl praktisch geschnitten und schmilzt etwa schichtweise mit hoher Geschwindigkeit. Unter diesen Bedingungen wird ein überwiegender Anteil der organischen Bestandteile (vor allem C und H) und werden die Elemente Al, Si etc. der metallischen Nichteisenfraktion im Autoschrott unmittelbar am Schmelzort (im Schmelzkrater 41) verbrannt und somit direkt als Energieträger für den Schmelzprozeß genutzt. Dabei entstehende Oxide - solche wie Al$_2$O$_3$, SiO$_2$, FeO$_n$ u.a. - bilden mit der Schrott-Asche und dem zugeführten Kalk eine große Schlackenmenge (etwa 150 kg Schlacke pro t Schrott im Schmelzkrater 41), welche sich bevorzugt im Kraterbereich konzentriert und wegen der sehr intensiven Gasblasenbildung (insbesondere von CO/CO$_2$, H$_2$/H$_2$O und O$_2$) stark schäumt. Diese Schmelzschlacke umhüllt weitgehend die Autoschrottpakete 29 und ermöglicht

- eine gute Wärmeübertragung,
- ein Aufheizen der Stahlschmelze,

- hohe Nachverbrennungsgrade $CO \rightarrow CO_2$ bzw. $H_2 \rightarrow H_2O$ (ca. 50 %),
- eine Minimierung von Wärmeverlusten und
- eine Verzögerung der Ausgasung des Organikanteiles aus den Autoschrottpaketen 29.

Die Menge der gebildeten Abgase während des Schmelzprozesses beträgt ca. 175 Nm$^3$ pro Tonne Schrott (50 % AS + 50 % MS). Sie werden durch die Abgasleitung 23 im oberen Bereich des Schrottvorwärmschachtes 21 abgezogen, wodurch ihre fühlbare Wärme sowohl für das Vorwärmen/Schmelzen des Schrottes im Ofengefäß 1, als auch für die Vorwärmung des Mischschrottes 22 im Vorwärmschacht 21 wirksam genutzt wird. Bei einer Verweildauer des Mischschrottes 22 im Vorwärmschacht von ca. 9 - 10 min wird unter den gegebenen Bedingungen eine Vorwärmtemperatur von ca. 700 °C erzielt. Dabei verlassen die Abgase den Vorwärmschacht 21 mit einer Temperatur von ca. 800 °C, wodurch eine Dioxinbildung thermisch wirksam unterdrückt wird.

Nach jeder erneuten Ausbildung eines Schmelzkraters 41 wird die beschriebene Chargier-/ Schmelzprozedur (in der Regel ohne Zuführung elektrischer Energie) noch fünfmal wiederholt, bis das Abstichgewicht erreicht ist Somit ist die Gesamtdauer dieser power-off Schmelzperiode im Schmelzkrater ca. 60 min (= 6 x ca. 10 min), wobei in diesen Schmelzzyklen insgesamt 4800 kg Kalk, 48 t Autoschrottpakete und 48 t Mischschrott 22 zugesetzt bzw. geschmolzen werden.

Vor der 4., 5. und 6. Chargier-/Schmelzprozedur der power-off Schmelzphase werden jeweils ca. 2 t Schlacke durch die Schlackentür 43 abgestochen und dadurch die Schlackenmenge im Ofengefäß 1 geregelt.

Nach Abschluß der power-off-Schmelzphase werden die Elektroden 34 abgesenkt und die Lichtbögen gezündet. Bei einer Schaumschlackenfahrweise unter verminderter $O_2$-Einblasgeschwindigkeit von ca. 35 Nm$^3$/min (nur über die Sauerstofflanze 38 durch die Schlackentür 43, die restlichen vier Sauerstofflanzen 38 werden ausgefahren) wird zunächst bei geringem Neigungswinkel der Elektroden 34 (etwa in Elektrodenposition C), der Schrott im wandnahen Bereich des Ofengefäßes 1 (aus dem Schmelzkrater) niedergeschmolzen. Dies erfolgt für ca. 2 min bei 40 MW (Stromverbrauch ca. 1200 kWh). Während der folgenden Flachbadperiode von ca. 6 min wird der Strahl bei einer elektrischen Wirkleistung von 60 MW und Einblasen von ca. 35 Nm$^3$ $O_2$/min über die Lanze 38 durch die Schlackentür 43 gefrischt (von ca. 0,20 auf 0,08 % C) und zugleich aufgeheizt (von ca. 1530 auf 1640 °C). Der Elektroenergieverbrauch beträgt dabei ca. 5500 kWh. Anschließend werden unter Belassung einer Reststahlmenge ca. 100 t abgestochen. Die Abstichdauer beträgt ca. 3 min. Bei einer Schmelzenfolgezeit von ca. 87 min beträgt die Leistung des Elektrolichtbogenofens 3 ca. 70 t Rohstahl je Stunde. Eine Zusammenfassung wichtiger Betriebsparameter ist aus Tafel 2 ersichtlich.

Die wesentlichen Vorteile, die das erfindungsgemäße Verfahren ermöglicht, lassen sich wie folgt zusammenfassen:

- Optimale Nutzung der chemischen und physikalischen Wärme der Prozeßgase für den Schmelzprozeß im Ofen und zur Vorwärmung des eingesetzten Schrottes (Eisenträger I im Schrottvorwärmschacht 21), auch durch ihre örtlich geregelte Nachverbrennung.
- Einfache Einstellmöglichkeit der Schrottvorwärmtemperatur über die Verweilzeit des Schrottes (Eisenträger I) im Schrottvorwärmschacht 21 bis ca. 750°C maximal unter Vermeidung unerwünschter Erscheinungen, wie z.B. Verzunderung, Ankleben bzw. "Hängen" des Schrottes im Schacht.
- Durchführungsmöglichkeit von Nachchargieroperationen ohne Öffnen des Deckels und gegebenenfalls ohne Unterbrechung der Stromzuführung, welche - zusammen mit der Schrottvorwärmung - eine Verkürzung der Einschmelzzeit, Senkung des Elektroenergieverbrauches und anderer Betriebskosten sowie eine erhöhte Ofenproduktivität (Wegfall des Zeitaufwandes für Entfernen der Elektroden und Wegschwenken des Deckels, Vermeidung damit verbundener Wärmeverluste) zur Folge hat.
- Gezielte (gleichmäßige oder örtlich konzentrierte) Zuführung der benötigten Schmelzenergie in weiten Bereichen des Ofengefäßes 1 während der gesamten Einschmelzzeit infolge schwenkbarer Elektroden 34 und somit Möglichkeit zur raschen und flexiblen Beeinflussung des Schmelz- bzw. Prozeßablaufes.
- Betriebssicherer Schmelzablauf (auch im eventuellen Störungsfall sind schnelle Gegenmaßnahmen durchführbar).
- Geringere Belastung der Ofenumgebung durch Lärm-, Hitze- und Schadstoffemissionen (da Chargieren/Nachchargieren aller Einsatzstoffe ohne Öffnen des Deckels und eine bessere Abgaserfassung und weitgehende Unterdrückung der Dioxinbildung möglich sind, was auch einen Staubaustrag mit dem Abgas wegen der "Vorfilter"-Funktion der Schrottsäule (Eisenträger I) im Vorwärmschacht etc. ergibt).
- Kinetisch günstige Bedingungen für den Stoff- und Wärmeaustausch, und somit für einen raschen Schmelz- und Frischablauf im Elektro-Lichtbogenofen, durch eine bezüglich des Ofenuntergefäßes bzw. der Badoberfläche örtlich verteilte Zuführung von stückigen und feinkörnigen Einsatzstoffen und Frischgasen (Eisenträger II, gegebenenfalls auch feinkörnige Eisenträger, Kohlenstoffträger, Schlackenbildner und sauerstoffhältiges Gas über mehrere Chargierschächte 26, 27, Lanzen 39 und/oder Düsen) und eine zusätzliche Baddurchmischung unter Verwendung einer Inertgasspülung.

- Abschirmung der Ofenwände durch den Schrottwall um den zentralen Schmelzkrater und/oder die Schaumschlakke während des nahezu gesamten Prozeßablaufes (somit Senkung des Feuerfestverschleißes durch Strahlung und Schlackenangriff bzw. geringere Wärmeverluste im Bereich der Gefäßwände etc.).
- Hoher Anteil von mit Organik belastetem Schrott möglich. Bevorzugt wird ein Anteil von 30 bis 40 % mit Organik verunreinigter Schrott, wie Autoschrott, am gesamten metallischen Einsatz.

Tafel 1

| Komponente | Schrottfraktion | Gew. % | |
|---|---|---|---|
| | | Mischschrott | Autopaketschrott |
| C | organischer Anteil | 0,4 | 9,24 |
| H | | 0,1 | 1,3 |
| N | | - | 0,4 |
| O | | 0,2 | 3,8 |
| S | | 0,02 | 0,3 |
| Cl | | 0,02 | 0,5 |
| F | | - | 0,12 |
| $H_2O$ | Feuchtigkeit | 0,1 | 1,5 |
| CaO | Asche-Anteil | 0,2 | 1,6 |
| MgO | | 0,1 | 0,5 |
| $SiO_2$ | | 0,5 | 4,3 |
| $Al_2O_3$ | | 0,1 | 0,7 |
| Rest | | 0,5 | 3,5 |
| Fe | metallischer Anteil | 96,96 | 67,04 |
| C | | 0,2 | 0,06 |
| Si | | 0,34 | 0,2 |
| Al | | - | 3,0 |
| Cu | | 0,06 | 0,54 |
| Zn | | 0,1 | 0,9 |
| Rest | | 0,1 | 0,5 |
| Summe | | 100,0 | 100,0 |

Tafel 2

| Einsatzstoffe | |
|---|---|
| · Autopaketschrott (AS) | 480 kg/t Rohstahl |
| · Mischschrott (MS) | 730 kg/t Rohstahl |
| · Stückkalk | 48 kg/t Rohstahl |
| · Kohle | 2 kg/t Rohstahl |
| · $O_2$ | 97 $Nm^3$/t Rohstahl |
| Produkte | |
| · Schlacke (18 % $FeO_n$ % CaO/% $SiO_2$ = 2,0-2,2) | 160 kg/t Rohstahl |
| · Abgas (ohne Falschluft) | 175 $Nm^3$/t Rohstahl (max. 300 $Nm^3$/min) |
| · Rohstahl            ca. | 70 t/h |
| Elektroenergieverbrauch | 120 - 125 kWh/t Rohstahl |
| Tap-to-tap-Zeit | 87 min |
| · Ofenreparatur + Elektroden-Nachsetzen | 6 min |
| · Chargieren 25 t MS (in zwei Portionen durch den Vorwärmschacht) | 4 min |
| · Erzeugung eines Schmelzkraters im MS (power-on) | 6 min |

Tafel 2   (fortgesetzt)

| Produkte | |
|---|---|
| · Chargieren/Schmelzen von AS, MS und Kalk (AS : MS = 50 : 50 Gew. %) unter $O_2$-Einblasen bei power-off | 60 min (= 6 x 10 min) |
| · Fertigschmelzen (Erzeugung eines Flachbades) | 2 min |
| · Flachbadperiode | 6 min |
| · Abstich | 3 min |

**Patentansprüche**

**1.** Verfahren zum Herstellen von Eisenschmelzen, insbesondere von Stahlschmelzen, durch chargenweises Einschmelzen von Eisenträgern (22, 29) in einem metallurgischen Gefäß (1) mit Hilfe von zumindest zum Teil durch mindestens einen Lichtbogen eingebrachter Energie, wobei als Eisenträger Mischschrott (22) und/oder Feinschrott und/oder Shredderschrott mit nur geringen organischen Anteilen (Eisenträger I) einerseits und Schrott mit weit höheren organischen Anteilen, wie Autoschrott (29), (Eisenträger II) andererseits eingesetzt werden, wobei das Verfahren folgende Merkmale enthält;

a) Chargieren einer ersten, zumindest teilweise aus Eisenträgern I und gegebenenfalls Eisenträger II bestehenden Teilmenge des Gesamteinsatzes der Eisenträger unter Bildung eines Schüttkegels im Zentrumsbereich,
b) Schmelzen eines zentralen Kraters (41) in den von der ersten Teilmenge gebildeten Schüttkegel mit Hilfe zentrumsnahe eingebrachter Lichtbogenenergie,
c) Chargieren mindestens einer weiteren, zumindest teilweise von Eisenträgern II und gegebenenfalls Eisenträger I gebildeten Teilmenge in den zentralen Krater (41) mit anschließendem abermaligen Schmelzen eines zentralen Kraters und
d) vollständiges Einschmelzen der noch festen Eisenträger (22, 29) mit Hilfe zentrumsentfernter und wandnäher eingebrachter Lichtbogenenergie,
e) worauf der Abstich gegebenenfalls nach einem Frischen und/oder Feinen erfolgt.

**2.** Verfahren nach Anspruch 1, dadurch gekennzeichnet, daß die erste Teilmenge ausschließlich von Eisenträgern I gebildet wird.

**3.** Verfahren nach Anspruch 1 oder 2, dadurch gekennzeichnet, daß die Eisenträger I vor dem Chargieren in das metallurgische Gefäß (1) in einen Vorwärmschacht (21) eingebracht, von aus dem metallurgischen Gefäß (1) abgezogenen heißen Prozeßgasen umströmt und anschließend in das metallurgische Gefäß (1) heiß chargiert werden, wogegen die Eisenträger II ohne Vorwärmung durch die Prozeßgase in das metallurgische Gefäß (1) chargiert werden.

**4.** Verfahren nach einem oder mehreren der Ansprüche 1 bis 3, dadurch gekennzeichnet, daß das Schmelzen der ersten Teilmenge durch Einblasen eines sauerstoffhältigen Gases unterstützt wird.

**5.** Verfahren nach einem oder mehreren der Ansprüche 1 bis 4, dadurch gekennzeichnet, daß das Schmelzen der der ersten Teilmenge nachfolgend chargierten Teilmenge(n) durch Einblasen eines sauerstoffhältigen Gases zumindest unterstützt wird.

**6.** Verfahren nach Anspruch 5, dadurch gekennzeichnet, daß das Schmelzen der der ersten Teilmenge nachfolgend chargierten Teilmenge(n) ausschließlich durch Einblasen eines sauerstoffhältigen Gases unter Verbrennung der organischen Anteile erfolgt.

**7.** Verfahren nach einem oder mehreren der Ansprüche 1 bis 6, dadurch gekennzeichnet, daß beim Abstich eine Restschmelze (6) in dem metallurgischen Gefäß (1) belassen wird, und die erste Teilmenge in die Restschmelze (6) chargiert wird.

**8.** Verfahren nach einem oder mehreren der Ansprüche 1 bis 7, dadurch gekennzeichnet, daß zur Herstellung von Stahl Schlackenbildner und gegebenenfalls Kohlenstoffträger (28) chargiert werden, vorzugsweise in Teilmengen.

9. Verfahren nach einem oder mehreren der Ansprüche 1 bis 8, dadurch gekennzeichnet, daß eine Bodenspülung mit Inertgas durchgeführt wird.

10. Verfahren nach einem oder mehreren der Ansprüche 1 bis 9, dadurch gekennzeichnet, daß ein sauerstoffhältiges Gas über mindestens eine Ein-/Aufblaslanze und/oder Düse bzw. Unterbaddüse in die Schmelze eingeblasen wird.

11. Verfahren nach einem oder mehreren der Ansprüche 1 bis 10, dadurch gekennzeichnet, daß Prozeßgase durch Zuführen eines sauerstoffhältigen Gases in die und/oder auf die Schaumschlacke und/oder oberhalb derselben in das metallurgische Gefäß (1) und/oder in den Vorwärmschacht (21) nachverbrannt werden.

12. Verfahren nach einem oder mehreren der Ansprüche 1 bis 11, dadurch gekennzeichnet, daß feinkörnige Materialien, wie Eisenträger, Kohlenstoffträger (wie aufbereitete organische Leichtfraktion) und/oder Schlackenbildner durch mindestens eine Ein-/Aufblaslanze und/oder Düse bzw. Unterbaddüse und/oder Hohlelektrode unter Verwendung eines Trägergases in das Metallbad eingeblasen werden.

13. Verfahren nach einem oder mehreren der Ansprüche 2 bis 12, dadurch gekennzeichnet, daß die Vorwärmtemperatur der Eisenträger I durch Wahl der Länge der Verweilzeit der Eisenträger I im Vorwärmschacht (21) eingestellt wird.

14. Verfahren nach einem oder mehreren der Ansprüche 2 bis 13, dadurch gekennzeichnet, daß die Vorwärmtemperatur der Eisenträger I durch Wahl von Menge, Zusammensetzung und Temperatur der aus dem metallurgischen Gefäß (1) abgezogenen Prozeßgase eingestellt wird.

15. Verfahren nach Anspruch 14, dadurch gekennzeichnet, daß die Vorwärmtemperatur der Eisenträger I durch eine Nachverbrennung der Prozeßgase eingestellt wird.

16. Verfahren nach einem oder mehreren der Ansprüche 1 bis 15, dadurch gekennzeichnet, daß zusätzlich Eisenschwamm in heißem oder kaltem Zustand in das metallurgische Gefäß (1) chargiert wird, vorzugsweise ebenfalls in Teilmengen.

17. Anlage zur Drhführung des Verfahrens nach einem oder mehreren der Ansprüche 1 bis 16, enthaltend folgende Merkmale:

- ein Eisenschmelze (6) aufnehmendes metallurgisches Gefäß (1),
- einen ortsfesten, Eisenträger I aufnehmenden Schacht (21), der in das metallurgische Gefäß (1) über eine im Deckel (19) angeordnete und mit einer Absperreinrichtung (25) versehene Öffnung (20) mündet,
- mindestens einen seitlich zum Schacht (21) benachbart angeordneten Chargierschacht (27) zur Aufnahme von Eisenträgern II, der über den Deckel (19) des metallurgischen Gefäßes (1) mittels einer Absperreinrichtung (30) in das metallurgische Gefäß (1) mündet, und
- in das metallurgische Gefäß (1) von oben ragende Elektroden (34), die von einer in Richtung zum Gefäßzentrum gerichteten Position A in eine näher zur Wand (15) des metallurgischen Gefäßes (1) gerichteten Position C schwenkbar sind.

18. Anlage nach Anspruch 17, dadurch gekennzeichnet, daß der die Eisenträger I aufnehmende Schacht (21) sowie seine Öffnung (20) im Zentrumsbereich des Deckels (19) angeordnet sind.

19. Anlage nach Anspruch 17 oder 18, gekennzeichnet durch mindestens einen weiteren seitlich zum Schacht (21) benachbart angeordneten Chargierschacht (26) zur Aufnahme von Schlackenbildnern (28) und/oder Eisenschwamm und/oder Kohlenstoffträgern, der über den Deckel (19) des metallurgischen Gefäßes (1) mittels einer Absperreinrichtung (30) in das metallurgische Gefäß (1) mündet.

20. Anlage nach Anspruch 19, dadurch gekennzeichnet, daß der untere Teil des Chargierschachtes (26, 27) mit einer schrägen, zum Zentrum des metallurgischen Gefäßes gerichteten Auslaufschurre (27') versehen ist.

21. Anlage nach einem oder mehreren der Ansprüche 17 bis 20, dadurch gekennzeichnet, daß die an der Öffnung (20) angeordnete Absperreinrichtung (25) des die Eisenträger I aufnehmenden Schachtes (21) gasdurchlässig ist und eine Gasableitung (23) am oberen Schachtende des Eisenträger I aufnehmenden Schachtes (21) vorgesehen ist und daß an den Einmündungen der Eisenträger II bzw. Schlackenbildner (28) und/oder Kohlenstoffträgern und/oder Eisenschwamm etc. aufnehmenden Schächte (26, 27) gasundurchlässige Absperreinrichtungen (30) vorgesehen sind.

22. Anlage nach einem oder mehreren der Ansprüche 17 bis 21, dadurch gekennzeichnet, daß das metallurgische Gefäß (1) kippbar ist

23. Anlage nach einem oder mehreren der Ansprüche 17 bis 22, dadurch gekennzeichnet, daß das metallurgische Gefäß (1) heb-, senk- und verfahrbar ist.

24. Anlage nach einem oder mehreren der Ansprüche 17 bis 23, dadurch gekennzeichnet, daß der die Eisenträger I aufnehmende Schacht (21) zentral angeordnet ist und daß mehrere Elektroden (34) die Öffnung (20) des Schachtes (21) umgeben, vorzugsweise radialsymmetrisch, und durch den Deckel (19) in das Innere des metallurgischen Gefäßes (1) ragen.

25. Anlage nach einem oder mehreren der Ansprüche 17 bis 24, dadurch gekennzeichnet, daß die Elektroden (34) in einer zum metallurgischen Gefäß (1) radialgerichteten Vertikalebene schwenkbar sind, vorzugsweise über einen Bereich, von der Vertikalen ausgehend in eine in Richtung zum Zentrum des metallurgischen Gefäßes (1) unter 30 ° zur Vertikalen gerichteten Position A bis in eine um max. 10 ° von der Vertikalen abweichende nach außen gerichtete Position.

26. Anlage nach einem oder mehreren der Ansprüche 17 bis 25, dadurch gekennzeichnet, daß von der Seite und/ oder durch den Deckel (19) in das metallurgische Gefäß (1) einbringbare Blaslanzen (38) und/oder Düsen für ein sauerstoffhältiges Gas vorgesehen sind.

27. Anlage nach einem oder mehreren der Ansprüche 17 bis 26, dadurch gekennzeichnet, daß im die Eisenträger I aufnehmenden Schacht (21) mindestens eine Düse für die Zuführung von sauerstoffhältigem und/oder stickstoffhältigem Gas vorgesehen ist.

28. Anlage nach einem oder mehreren der Ansprüche 17 bis 27, dadurch gekennzeichnet, daß das metallurgische Gefäß (1) mit Bodendüsen (40) für Inertgas und/oder mit Unterbaddüsen für sauerstoffhältiges Gas ausgestattet ist.

29. Anlage nach einem oder mehreren der Ansprüche 17 bis 28, dadurch gekennzeichnet, daß das metallurgische Gefäß (1) mit mindestens einer Ein-/Aufblaslanze (39) bzw. Düse und/oder Unterbaddüse und/oder Hohlelektrode für die Zuführung von feinkörnigen Materialien (Eisenträger, Kohlenstoffträger und/oder Schlackenbildner) unter Verwendung eines Trägergases ausgestattet ist.

30. Anlage nach einem oder mehreren der Ansprüche 17 bis 29, dadurch gekennzeichnet, daß das metallurgische Gefäß (1) auf Hubzylindern (8, 9) gegenüber dem Fundament (10) abgestützt ist, vorzugsweise auf drei Hubzylindern (8, 9).

31. Anlage nach Anspruch 30, dadurch gekennzeichnet, daß das metallurgische Gefäß (1) in Schmelzposition mittels seitlich in dessen Wand (15) einsetztbarer Verriegelungsbolzen (14) fixierbar ist, wobei mindestens zwei Verriegelungsbolzen (14) unter Bildung einer Schwenkachse (18) für das metallurgische Gefäß (1) zueinander fluchtend angeordnet sind, und daß die Verriegelungsbolzen mittels einer Stelleinrichtung (17) aus einer in die Wand (15) des metallurgischen Gefäßes (1) eingreifenden Verriegelungsposition in eine zurückgezogene, das metallurgische Gefäß (1) freigebende Position und umgekehrt bringbar sind.

32. Anlage nach einem oder mehreren der Ansprüche 17 bis 31, gekennzeichnet durch einen bis unterhalb des metallurgischen Gefäßes (1) fahrbaren Wagen (11), auf dem wahlweise eine Pfanne (12) oder das metallurgische Gefäß (1) selbst absetzbar und mittels des Wagens (11) verfahrbar sind.

**Claims**

1. A process for producing iron melts, in particular steel melts, by batch-wisely melting iron carriers (22, 29) in a metallurgical vessel (1) by the aid of energy at least partially introduced by at least one electric arc, wherein mixed scrap (22) and/or fine scrap and/or Shredder scrap having but low organic portions (iron carrier I), on the one hand, and scrap having far higher organic portions such as car scrap (29) (iron carrier II), on the other hand, are used as said iron carriers, said process comprising the following characteristic features:

> a) charging of a first partial amount of the overall iron carrier charge, at least partially comprised of iron carriers I and optionally iron carriers II under the formation of a dumping cone in the central region,
> b) melting of a central crater (41) in the dumping cone formed by the first partial amount, by the aid of electric arc energy introduced close to the center,
> c) charging of at least a further partial amount at least partially comprised of iron carriers II and optionally iron carriers I into the central crater (41) followed by the melting of a new central crater, and
> d) complete melting of the yet solid iron carriers (22, 29) by the aid of electric arc energy introduced remote from the center and closer to the wall,
> e) followed by tapping optionally after refining and/or fining.

2. A process according to claim 1, characterized in that the first partial amount is exclusively formed by iron carriers I.

3. A process according to claim 1 or 2, characterized in that the iron carriers I prior to being charged into the metallurgical vessel (1) are introduced into a preheating shaft (21), enveloped by hot process gases drawn off the metallurgical vessel (1) and subsequently charged into the metallurgical vessel (1) in the hot state, whereas the iron carriers II are charged into the metallurgical vessel (1) without preheating by process gases.

4. A process according to one or several of claims 1 to 3, characterized in that melting of the first partial amount is assisted by blowing in an oxygen-containing gas.

5. A process according to one or several of claims 1 to 4, characterized in that melting of the partial amount(s) charged after the first partial amount is at least assisted by blowing in an oxygen-containing gas.

6. A process according to claim 5, characterized in that melting of the partial amount(s) charged after the first partial amount is effected exclusively by blowing in an oxygen-containing gas while burning the organic portions.

7. A process according to one or several of claims 1 to 6, characterized in that a residual melt (6) is left in the metallurgical vessel (1) during tapping and the first partial amount is charged into the residual melt (6).

8. A process according to one or several of claims 1 to 7, characterized in that slag formers and optionally carbon carriers (28) are charged, preferably in partial amounts, for the production of steel.

9. A process according to one or several of claims 1 to 8, characterized in that bottom flushing is carried out by means of an inert gas.

10. A process according to one or several of claims 1 to 9, characterized in that an oxygen-containing gas is blown into the melt via at least one blow-in/top-blowing lance and/or tuyere or submerged tuyere.

11. A process according to one or several of claims 1 to 10, characterized in that process gases are afterburned by feeding an oxygen-containing gas into and/or onto the foamed slag and/or above the same into the metallurgical vessel (1) and/or into the preheating shaft (12).

12. A process according to one or several of claims 1 to 11, characterized in that fine-grained materials such as iron carriers, carbon carriers (such as treated organic light fraction) and/or slag formers are blown into the metal bath through at least one blow-in/top-blowing lance and/or tuyere or submerged tuyere and/or hollow electrode, using a carrier gas.

13. A process according to one or several of claims 2 to 12, characterized in that the preheating temperature of the iron carriers I is adjusted by selecting the length of the residence time of the iron carriers I within the preheating shaft (21).

14. A process according to one or several of claims 2 to 13, characterized in that the preheating temperature of the iron carriers I is adjusted by selecting the amount, composition and temperature of the process gases drawn off the metallurgical vessel (1).

15. A process according to claim 14, characterized in that the preheating temperature of the iron carriers I is adjusted by afterburning the process gases.

16. A process according to one or several of claims 1 to 15, characterized in that sponge iron is additionally charged into the metallurgical vessel (1) in the hot or cold state, preferably also in partial amounts.

17. A plant for carrying out the process according to one or several of claims 1 to 16, comprising the following characteristic features:

- a metallurgical vessel (1) receiveing an iron melt (6),
- a stationary shaft (21) receiving iron carriers I and running into the metallurgical vessel (1) via an opening (20) arranged in the lid (19) and provided with a locking means (25),
- at least one charging shaft (27) for receiving iron carriers II arranged laterally adjacent the shaft (21) and running into the metallurgical vessel (1) via the lid (19) of the metallurgical vessel (1) by means of a locking device (30), and
- electrodes (34) projecting into the metallurgical vessel (1) from top and capable of being pivoted from a position A oriented in the direction towards the center of the vessel into a position C oriented closer to the wall (15) of the metallurgical vessel (1).

18. A plant according to claim 17, characterized in that the shaft (21) receiving the iron carriers I and its opening (20) are arranged in the region of the center of the lid (19).

19. A plant according to claim 17 or 18, characterized by at least one further charging shaft (26) for receiving slag formers (28) and/or sponge iron and/or carbon carriers arranged laterally adjacent the shaft (21) and running into the metallurgical vessel (1) via the lid (19) of the metallurgical vessel (1) by means of a locking device (30).

20. A plant according to claim 19, characterized in that the lower part of the charging shaft (26, 27) is provided with an oblique discharge chute (27') oriented towards the center of the metallurgical vessel.

21. A plant according to one or several of claims 17 to 20, characterized in that the locking device (25) arranged at the opening (20), of the shaft (21) receiving the iron carriers I is gaspermeable and a gas duct (23) is provided on the upper shaft end of the shaft (21) receiving the iron carriers I and that gas-impermeable locking devices (30) are provided at the mouths of the shafts (26, 27) receiving the iron carriers II or slag formers (28) and/or carbon carriers and/or sponge iron, etc., respectively.

22. A plant according to one or several of claims 17 to 21, characterized in that the metallurgical vessel (1) is tiltable.

23. A plant according to one or several of claims 17 to 22, characterized in that the metallurgical vessel (1) is liftable, lowerable and displaceable.

24. A plant according to one or several of claims 17 to 23, characterized in that the shaft (21) receiving the iron carriers I is arranged centrally and that several electrodes (34) surround the opening (20) of the shaft (21), preferably in a radially symmetrical manner, and project into the interior of the metallurgical vessel (1) through the lid (19).

25. A plant according to one or several of claims 17 to 24, characterized in that the electrodes (34) are pivotable in a vertical plane oriented radially to the metallurgical vessel (1), preferably over a region departing from the vertical into a position A oriented towards the center of the metallurgical vessel (1) at an angle of $30^\circ$ relative to the vertical as far as to an outwardly directed position deviating from the vertical by a maximum of $10^\circ$.

26. A plant according to one or several of claims 17 to 25, characterized in that blowing lances (38) and/or tuyeres for an oxygen-containing gas capable of being introduced into the metallurgical vessel (1) from the side and/or through the lid (19) are provided.

27. A plant according to one or several of claims 17 to 26, characterized in that at least one tuyere for feeding an oxygen-containing and/or nitrogen-containing gas is provided in the shaft (21) receiving the iron carriers I.

28. A plant according to one or several of claims 17 to 27, characterized in that the metallurgical vessel (1) is equipped with bottom tuyeres (40) for an inert gas and/or with submerged tuyeres for an oxygen-containing gas.

**29.** A plant according to one or several of claims 17 to 28, characterized in that the metallurgical vessel (1) is equipped with at least one blow-in/top-blowing lance (39) or tyuere and/or submerged tuyere and/or hollow electrode for supplying fine-grained materials (iron carriers, carbon carriers and/or slag formers), using a carrier gas.

**30.** A plant according to one or several of claims 17 to 29, characterized in that the metallurgical vessel (1) is supported relative to the base (10) on lifting cylinders (8, 9), preferably on three lifting cylinders (8, 9).

**31.** A plant according to claim 30, characterized in that the metallurgical vessel (1) in the melting position is fixed by means of locking pins (14) capable of being inserted laterally in its wall (15), at least two locking pins (14) being arranged in an aligned manner forming a pivot axis (18) for the metallurgical vessel (1), and that the locking pins are movable by means of an actuating device (17) from a locking position engaging in the wall (15) of the metallurgical vessel (1) into a retracted position releasing the metallurgical vessel (1), and back.

**32.** A plant according to one or several of claims 17 to 31, characterized by a carriage (11) movable as far as to below the metallurgical vessel (1) and on which alternatively a ladle (12) or the metallurgical vessel (1) itself may be deposited and displaced by means of the carriage (11).

**Revendications**

**1.** Procédé de production de fer en fusion, en particulier d'acier en fusion, par fusion discontinue de porteurs de fer (22,29) dans une cuve métallurgique (1) à l'aide d'énergie amenée, au moins en partie, par au moins un arc électrique, dans lequel sont utilisés comme porteurs de fer un mélange de déchets (22) et/ou des déchets raffinés et/ou des déchets Schredder présentant des parties organiques seulement faibles (porteurs de fer I), d'une part, et des déchets présentant des parties organiques nettement plus grandes, tels que des déchets de véhicules automobiles (29), (porteurs de fer II), d'autre part, le procédé comportant les caractéristiques suivantes :

a) le chargement d'une première partie de la charge d'ensemble des porteurs de fer, au moins partiellement constituée de porteurs de fer I et, le cas échéant, de porteurs de fer II, avec formation d'un cône de débris dans la zone centrale,
b) la fusion d'un cratère central (41) dans le cône de débris formé par la première partie d'ensemble, à l'aide d'énergie d'arc électrique amenée à proximité du centre,
c) le chargement d'au moins une partie d'ensemble supplémentaire formée au moins partiellement par les porteurs de fer II et, le cas échéant, des porteurs de fer I, dans le cratère central (41) avec ensuite à nouveau la fusion d'un cratère central et
d) la fusion complète de porteurs de fer (22, 29) encore solides à l'aide d'énergie d'arc électrique amenée à l'écart du centre et plus près de la paroi,
e) après quoi la coulée a lieu éventuellement après un soufflage et/ou raffinage.

**2.** Procédé suivant la revendication 1, caractérisé en ce que la première quantité d'ensemble est constituée exclusivement de porteurs de fer I.

**3.** Procédé suivant l'une des revendications 1 ou 2, caractérisé en ce que les porteurs de fer I sont amenés dans un conduit de préchauffage (21) avant le chargement dans la cuve métallurgique (1), déviés par des gaz de processus chauds tirés de la cuve métallurgique (1) et ensuite chargés à l'état chaud dans la cuve métallurgique (1), tandis que les porteurs de fer II sont chargés dans la cuve métallurgique (1) sans préchauffage par le gaz de processus.

**4.** Procédé suivant l'une quelconque des revendications 1 à 3, caractérisé en ce que la fusion de la première quantité d'ensemble est soutenue par l'insufflation d'un gaz à teneur en oxygène.

**5.** Procédé suivant l'une quelconque des revendications 1 à 4, caractérisé en ce que la fusion de la ou des partie(s) d'ensemble chargée(s) consécutivement à la première partie d'ensemble est soutenue par insufflation d'un gaz à teneur en oxygène au moins.

**6.** Procédé suivant la revendication 5, caractérisé en ce que la fusion de la ou des partie(s) d'ensemble chargée(s) consécutivement à la première partie d'ensemble a lieu exclusivement par insufflation d'un gaz à teneur en oxygène avec combustion des parties organiques.

7. Procédé suivant l'une quelconque des revendications 1 à 6, caractérisé en ce que lors de la coulée, une coulée résiduelle (6) est maintenue dans la cuve métallurgique (1), et la première partie d'ensemble est chargée dans la coulée résiduelle (6).

8. Procédé suivant l'une quelconque des revendications 1 à 7, caractérisé en ce que pour la production d'acier, des fondants de laitier et, le cas échéant, des porteurs de charbon (28) sont chargés, de préférence, en parties d'ensemble.

9. Procédé suivant l'une quelconque des revendications 1 à 8, caractérisé en ce qu'un curage de fond est effectué avec un gaz inerte.

10. Procédé suivant l'une quelconque des revendications 1 à 9, caractérisé en ce qu'un gaz à teneur en oxygène est insufflé dans le fondant par l'intermédiaire d'au moins une lance d'insufflation/de soufflage et/ou un ajutage, respectivement ajutage de bain inférieur.

11. Procédé suivant l'une quelconque des revendications 1 à 10, caractérisé en ce que des gaz de processus sont soumis à une post - combustion par l'amenée d'un gaz à teneur en oxygène dans le laitier moussant et/ou sur celui-ci et/ou au-dessus de ce dernier dans la cuve métallurgique (1) et/ou dans le conduit de préchauffage (21).

12. Procédé suivant l'une quelconque des revendications 1 à 11, caractérisé en ce que les matériaux à grains fins, tels que des porteurs de fer, des porteurs de charbon (tels qu'une fraction organique légère préparée) et/ou des fondants de laitier sont insufflés dans le bain métallique par au moins une lance d'insufflation/de soufflage et/ou un ajutage, respectivement un ajutage de bain inférieur et/ou une électrode creuse avec utilisation d'un gaz porteur.

13. Procédé suivant l'une quelconque des revendications 2 à 12, caractérisé en ce que la température de préchauffage des porteurs de fer I est réglée par la sélection de la longueur de la durée de séjour des porteurs de fer I dans le conduit de préchauffage (21).

14. Procédé suivant l'une quelconque des revendications 2 à 13, caractérisé en ce que la température de préchauffage des porteurs de fer I est réglée par la sélection de la quantité, de la composition et de la température des gaz de processus tirés de la cuve métallurgique (1).

15. Procédé suivant la revendication 14, caractérisé en ce que la température de préchauffage des porteurs de fer I est réglée par une post - combustion des gaz de processus.

16. Procédé suivant l'une quelconque des revendications 1 à 15, caractérisé en ce que, en plus, de l'éponge de fer est chargée à l'état chaud ou froid dans la cuve métallurgique (1), de préférence même en parties d'ensemble.

17. Installation de mise en oeuvre du procédé suivant l'une quelconque des revendications 1 à 16 comportant les caractéristiques suivantes :

- une cuve métallurgique (1) recevant du fer en fusion (6),
- un conduit (21) fixe, qui reçoit des porteurs de fer I et qui débouche dans la cuve métallurgique (1) par une ouverture (20), qui est agencée dans le couvercle (19) et qui est pourvue d'un dispositif d'obturation (25),
- au moins un conduit de chargement (27), qui est agencé latéralement de façon contiguë au conduit (21), qui est destiné à la réception de porteurs de fer II et qui débouche dans la cuve métallurgique (1) par l'intermédiaire du couvercle (19) de la cuve métallurgique (1) au moyen d'un dispositif d'obturation (30), et
- des électrodes (34), qui font saillie dans la cuve métallurgique (1) par le dessus et qui sont pivotantes depuis une position A orientée suivant une direction tournée vers le centre de la cuve, dans une position C orientée plus prés de la paroi (15) de la cuve métallurgique (1).

18. Installation suivant la revendication 17, caractérisée en ce que le conduit (21) recevant les porteurs de charge I ainsi que son ouverture (20) sont agencés dans la zone centrale du couvercle (19).

19. Installation suivant l'une des revendications 17 ou 18, caractérisée par au moins un conduit de chargement supplémentaire (26), qui est agencé latéralement et de façon contiguë au conduit (21) pour la réception de fondants de laitier (28) et/ou d'éponge de fer et/ou de porteurs de charbon, et qui débouche dans la cuve métallurgique (1) par le couvercle (19) de la cuve métallurgique (1) au moyen d'un dispositif d'obturation (30).

**20.** Installation suivant la revendication 19, caractérisée en ce que la partie inférieure du conduit de chargement (26, 27) est pourvue d'une goulotte de sortie (27') inclinée, qui est tournée vers le centre de la cuve métallurgique.

**21.** Installation suivant l'une quelconque des revendications 17 à 20, caractérisée en ce que le dispositif d'obturation (25) du conduit (21) recevant les porteurs de fer I, qui est agencé à hauteur de l'ouverture (20), est perméable aux gaz, et un élément d'évacuation du gaz (23) est prévu à hauteur de l'extrémité supérieure du conduit (21) recevant les porteurs de fer I, et en ce que des dispositifs d'obturation (30) non perméables aux gaz sont prévus à hauteur des entrées des conduits (26, 27) recevant les porteurs de fer II et respectivement les fondants de laitier (28) et/ou les porteurs de charbon et/ou l'éponge de fer, etc. .

**22.** Installation suivant l'une quelconque des revendications 17 à 21, caractérisée en ce que la cuve métallurgique (1) est basculante.

**23.** Installation suivant l'une quelconque des revendications 17 à 22, caractérisée en ce que la cuve métallurgique (1) peut être levée, baissée et déplacée.

**24.** Installation suivant l'une quelconque des revendications 17 à 23, caractérisée en ce que le conduit (21) recevant les porteurs de charge I est agencé de façon centrale et en ce que plusieurs électrodes (34) entourent l'ouverture (20) du conduit (21), de préférence avec symétrie radiale, et font saillie à l'intérieur de la cuve métallurgique (1) à travers le couvercle (19).

**25.** Installation suivant l'une quelconque des revendications 17 à 24, caractérisée en ce que les électrodes (34) sont pivotantes dans un plan vertical orienté de façon radiale par rapport à la cuve métallurgique (1), de préférence sur une gamme partant de la verticale dans une position A tournée en direction du centre de la cuve métallurgique (1) sous 30° par rapport à la verticale jusqu'à une position tournée vers l'extérieur s'écartant d'environ maximum 10° de la verticale.

**26.** Installation suivant l'une quelconque des revendications 17 à 25, caractérisée en ce qu'il est prévu des lances de soufflage (38) et/ou des ajutages pour un gaz à teneur en oxygène pouvant être introduits dans la cuve métallurgique (1) depuis le côté et/ou à travers le couvercle (19).

**27.** Installation suivant l'une quelconque des revendications 17 à 26, caractérisée en ce qu'il est prévu dans le conduit (21) recevant les porteurs de fer I au moins un ajutage destiné à l'amenée de gaz à teneur en oxygène et/ou en azote.

**28.** Installation suivant l'une quelconque des revendications 17 à 27, caractérisée en ce que la cuve métallurgique (1) est munie d'ajutages de fond (40) destinés à des gaz inertes et/ou des ajutages de bain inférieur destinés à un gaz à teneur en oxygène.

**29.** Installation suivant l'une quelconque des revendications 17 à 28, caractérisée en ce que la cuve métallurgique (1) est munie d'au moins une lance d'insufflation/de soufflage (39), respectivement d'un ajutage et/ou d'un ajutage de bain inférieur et/ou d'une électrode creuse pour l'amenée des matières à grains fins (porteurs de fer, porteurs de charbon et/ou fondants de laitier) avec utilisation d'un gaz porteur.

**30.** Installation suivant l'une quelconque des revendications 17 à 29, caractérisée en ce que la cuve métallurgique (1) est en appui sur des cylindres de levage (8, 9) vis-à-vis de la fondation (10), de préférence sur trois cylindres de levage (8, 9).

**31.** Installation suivant la revendications 30, caractérisée en ce que la cuve métallurgique (1) peut être fixée en position de fusion au moyen de boulons de verrouillage (14) pouvant être introduits latéralement dans sa paroi (15), au moins deux boulons de verrouillage (14) étant agencés en alignement mutuel avec formation d'un axe de pivotement (18) pour la cuve métallurgique (1), et en ce que les boulons de verrouillage peuvent être amenés, au moyen d'un dispositif de réglage (17), dans une position retirée libérant la cuve métallurgique (1) à partir d'une position de verrouillage s'engageant dans la paroi (15) de la cuve métallurgique (1), et inversement.

**32.** Installation suivant l'une quelconque des revendications 17 à 31, caractérisée par un chariot (11), qui peut être conduit jusqu'en dessous de la cuve métallurgique (1) et sur lequel une poche (12) ou la cuve métallurgique (1) elle-même, au choix, peut être déposée et être déplacée au moyen du chariot (11).

FIG. 1

FIG. 2

FIG. 4

FIG. 3

FIG. 5

FIG. 6